(19) **Europäisches Patentamt / European Patent Office / Office européen des brevets**

(11) **EP 2 896 675 B1**

(12) **EUROPEAN PATENT SPECIFICATION**

(45) Date of publication and mention
of the grant of the patent:
**29.11.2017 Bulletin 2017/48**

(21) Application number: **12884643.3**

(22) Date of filing: **11.09.2012**

(51) Int Cl.:
*C09K 11/66* (2006.01)     *C09K 11/77* (2006.01)
*C09K 11/02* (2006.01)

(86) International application number:
**PCT/CN2012/081249**

(87) International publication number:
**WO 2014/040227 (20.03.2014 Gazette 2014/12)**

(54) **STANNATE LUMINESCENT MATERIAL AND PREPARATION METHOD THEREOF**

STANNATLEUCHTSTOFF UND HERSTELLUNGSVERFAHREN DAFÜR

SUBSTANCE LUMINESCENTE À BASE DE STANNATE ET SON PROCÉDÉ DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.07.2015 Bulletin 2015/30**

(73) Proprietors:
• **Ocean's King Lighting Science&Technology Co.,
Ltd.**
**Shenzhen, Guangdong 518054 (CN)**
• **Shenzhen Ocean's King Lighting
Engineering Co. Ltd.**
**Guangdong 518054 (CN)**

(72) Inventors:
• **ZHOU, Mingjie**
**Shenzhen**
**Guangdong 518054 (CN)**
• **WANG, Rong**
**Shenzhen**
**Guangdong 518054 (CN)**

(74) Representative: **Michalski Hüttermann & Partner
Patentanwälte mbB
Speditionstraße 21
40221 Düsseldorf (DE)**

(56) References cited:
**WO-A1-2011/153692     WO-A1-2011/153692
CN-A- 1 951 822     CN-A- 1 951 822
JP-A- S56 104 989**

• **HIRAYAMA M ET AL: "Relationship between
structural characteristics and photoluminescent
properties of (La1-xEux)2M2O7 (M=Zr, Hf, Sn)
pyrochlores", JOURNAL OF LUMINESCENCE,
ELSEVIER BV NORTH-HOLLAND, NL, vol. 128,
no. 11, 1 November 2008 (2008-11-01), pages
1819-1825, XP023614115, ISSN: 0022-2313, DOI:
10.1016/J.JLUMIN.2008.05.005 [retrieved on
2008-05-14]**
• **KADIR, A. ET AL.: 'Fluorescent Core-Shell Ag@
SiO2 Nanocomposites for Metal-Enhanced
Fluorescence and Single Nanoparticle Sensing
Platforms' JOURNAL OF THE AMERICAN
CHEMICAL SOCIETY vol. 129, 19 January 2007,
pages 1524 - 1525, XP055069426**
• **WANG, SHUMEI ET AL.: 'Synthesis and
luminescence properties of La2-xRExSn2O7 (RE
= Eu and Dy) phosphor nanoparticles'
MATERIALS SCIENCE AND ENGINEERING B vol.
133, 2006, pages 231 - 234, XP027954064**

**EP 2 896 675 B1**

**Description**

**FIELD OF THE INVENTION**

The present disclosure relates to the field of luminescent materials, and more particularly relates to a stannate oxide luminescent material and preparation method thereof.

**BACKGROUND OF THE INVENTION**

Field emission display (FED) is a newly developed flat panel display. The principle of FED is similar to that of conventional cathode ray tube (CRT), which generates images by using electron beam to bombard the luminescent material of the display. Compared with other flat panel displays (FPD), the FED has many potential advantages in brightness, viewing angle, response time, operating temperature range, power consumption, etc. One of the key factors in the preparation of FED with excellent performance is the preparation of luminescent materials.

The International PCT Application WO2011/153692 A1 discloses an oxide stannate luminescent material, which is represented by the following chemical formula: Ln2-xEuxSn2O7, wherein Ln is a metal selected from the group consisting of Gd, Y and La, and the scope of x is: 0.1<=x<=1.5.

However, the luminous intensity of the conventional luminescent materials is too low to obtain a FED with excellent luminescent properties.

**SUMMARY OF THE INVENTION**

Accordingly, it is necessary to address the problem of low luminous intensity of the conventional luminescent materials and to provide a stannate luminescent material having a higher luminous intensity and preparation method thereof.

A stannate luminescent material has a general molecular formula of $Ln_{2-x}Eu_xSn_2O_7@SnO_2@M_y$,

wherein Ln is selected from the group consisting of Gd, Y, and La;

M is at least one metal nanoparticles selected from the group consisting of Ag, Au, Pt, Pd, and Cu;

$$0<x\leq1.5;$$

y is a molar ratio between M and the sum of Sn in $Ln_{2-x}Eu_xSn_2O_7$ and in $SnO_2@M_y$, $0<y\leq1\times10^{-2}$;

@ represents coating; the stannate luminescent material uses M as a core, $SnO_2$ as an inner shell, and $Ln_{2-x}Eu_xSn_2O_7$ as an outer shell.

In one embodiment, $0.02\leq x\leq1.0$.

In one embodiment, $1\times10^{-5}\leq y\leq5\times10^{-3}$.

A method of preparing a stannate luminescent material includes the following steps:

preparing a sol containing M, wherein M is at least one metal nanoparticles selected from the group consisting of Ag, Au, Pt, Pd and Cu;

surface-treating the sol containing M, adjusting a pH value of the sol containing M to 10 to 12, heating the sol containing M at a temperature of 60°C to 90°C with stirring, adding sodium stannate, potassium stannate or tin tetrachloride, stirring to react, centrifuging and drying, calcining at a temperature of 300°C to 500°C for 1 to 6 hours to obtain $SnO_2$ powder coating M;

mixing compounds containing Ln and Eu, a fluxing agent, and the $SnO_2$ powder coating M according to a stoichiometry ratio in a molecular formula of $Ln_{2-x}Eu_xSn_2O_7@SnO_2@M_y$ to obtain a mixture, grinding the mixture, wherein Ln is selected from the group consisting of Gd, Y, and La; $0<x\leq1.5$; y is a molar ratio between M and the sum of Sn in $Ln_{2-x}Eu_xSn_2O_7$ and in $SnO_2@M_y$, $0<y\leq1\times10^{-2}$; and

pre-heating the ground mixture at a temperature of 300°C to 500°C for 3 to 5 hours, cooling and grinding to obtain a pre-heated ground product, calcining the pre-heated ground product at a temperature of 1200°C to 1400°C for 1 to 24 hours, cooling and grinding to obtain the stannate luminescent material having the general molecular formula of $Ln_{2-x}Eu_xSn_2O_7@SnO_2@M_y$, wherein @ represents coating; the stannate luminescent material uses M as a core, $SnO_2$ as an inner shell, and $Ln_{2-x}Eu_xSn_2O_7$ as an outer shell.

In one embodiment, the preparing the sol containing M includes:

mixing and reacting a salt solution of at least one of Ag, Au, Pt, Pd, and Cu, an additive, and a reducing agent for 10 minutes to 45 minutes to obtain the sol containing M nanoparticles.

In one embodiment, a concentration of the salt solution of at least one of Ag, Au, Pt, Pd, and Cu ranges from $1 \times 10^{-3}$ mol/L to $5 \times 10^{-2}$ mol/L.

In one embodiment, the additive is at least one selected from the group consisting of polyvinyl pyrrolidone, sodium citrate, cetyl trimethyl ammonium bromide, sodium lauryl sulfate, and sodium dodecyl sulfate; a concentration of additive in the sol containing M ranges from $1 \times 10^{-4}$ g/mL to $5 \times 10^{-2}$ g/mL.

In one embodiment, the reducing agent is at least one selected from the group consisting of hydrazine hydrate, ascorbic acid, sodium citrate, and sodium borohydride; a molar ratio of the reducing agent to a metal ion in the salt solution of at least one of Ag, Au, Pt, Pd, and Cu ranges from 3.6:1 to 18:1.

In one embodiment, the fluxing agent is boric acid or magnesium fluoride.

In one embodiment, a percentage of the molar amount of the fluxing agent to the molar amount of the stannate luminescent material is 0.01% to 5%.

The forgoing stannate luminescent material has a core-shell structure using at least one metal nanoparticles of Ag, Au, Pt, Pd, and Cu as the core, $SnO_2$ as an inner shell, and $Ln_{2-x}Eu_xSn_2O_7$ as an outer shell. The metal nanoparticles can improve the internal quantum efficiency of the luminescent material, so that the luminous intensity of the stannate luminescent material becomes higher.

## BRIEF DESCRIPTION OF THE DRAWINGS

FIG. 1 is a flow chart of a method of preparing a stannate oxide luminescent material in accordance with one embodiment;

FIG. 2 is a graphical representation of cathodoluminescence spectrum under a voltage of 1.5kV of the stannate luminescent material of $Y_{1.9}Eu_{0.1}Sn_2O_7@SnO_2@Au_{1.5 \times 10^{-4}}$ prepared in accordance with Example 2 and the luminescent material of $Y_{1.9}Eu_{0.1}Sn_2O_7@SnO_2$ without coating metal nanoparticles.

## DETAILED DESCRIPTION OF THE EMBODIMENTS

Reference will now be made to the drawings to describe, in detail, embodiments of the present stannate luminescent material and preparation method thereof.

An embodiment of a stannate luminescent material is provided having the general molecular formula of $Ln_{2-x}Eu_xSn_2O_7@SnO_2@M_y$;

wherein Ln is selected from the group consisting of gadolinium (Gd), yttrium (Y), and lanthanum (La);

M is at least one metal nanoparticles selected from the group consisting of silver (Ag), gold (Au), platinum (Pt), palladium (Pd), and copper (Cu).

$$0 < x \leq 1.5, \text{ preferably } 0.02 \leq x \leq 1.0;$$

y is a molar ratio between M and the sum of Sn in $Ln_{2-x}Eu_xSn_2O_7$ and in $SnO_2@My$, $0 < y \leq 1 \times 10^{-2}$, preferably $1 \times 10^{-5} \leq y \leq 5 \times 10^{-3}$;

@ represents coating; the stannate luminescent material uses M as a core, $SnO_2$ as an inner shell, and $Ln_{2-x}Eu_xSn_2O_7$ as an outer shell.

As the core of the stannate luminescent material, metal nanoparticles M can cause a surface plasmon resonance effect, so as to improve the internal quantum efficiency of the stannate luminescent material.

The stannate $Ln_2Sn_2O_7$ exhibits a relative high chemical stability and high temperature stability. In the $Ln_{2-x}Eu_xSn_2O_7$ outer shell, Eu is doped in the stannate $Ln_2Sn_2O_7$ to replace partial Ln, such that the obtained stannate composition has an excellent stability.

The divalent Eu ion is an activating ion in the stannate luminescent material, which drives the stannate luminescent material to emit red light.

A molar ratio between the Ln and the Eu is 2-x:x, $0 < x \leq 1.5$, preferably $0.02 < x \leq 1.0$, so as to form an emitting center, thus increasing the luminous intensity, while avoiding luminescence quenching caused by excessive concentration of $Eu^{2+}$.

y is the molar ratio between M and the sum of Sn in $Ln_{2-x}Eu_xSn_2O_7$ and in $SnO_2@M_y$, $0<y\leq1\times10^{-2}$, preferably $1\times10^{-5}\leq y\leq5\times10^{-3}$, such that the surface plasmon resonance effect can be produced to improve the internal quantum efficiency of the stannate luminescent material, while avoiding luminescence quenching caused by excessive content of M.

The forgoing stannate luminescent material has a core-shell structure using at least one metal nanoparticles of Ag, Au, Pt, Pd, and Cu as the core, $SnO_2$ as an inner shell, and $Ln_{2-x}Eu_xSn_2O_7$ as an outer shell. The metal nanoparticles can improve the internal quantum efficiency of the luminescent material, so that the luminous intensity of the stannate luminescent material becomes higher.

Since M, $SnO_2$, and $Ln_{2-x}Eu_xSn_2O_7$ are all chemical stable substance, the stannate luminescent material with the core-shell structure exhibits a better stability, as well as the higher luminous intensity.

Accordingly, the stannate luminescent material can be widely applied in the field of display and lighting applications due to its high stability and good luminescent properties. When the stannate luminescent material is applied to the field emission display (FED), the luminescence properties the field emission display (FED) can be improved.

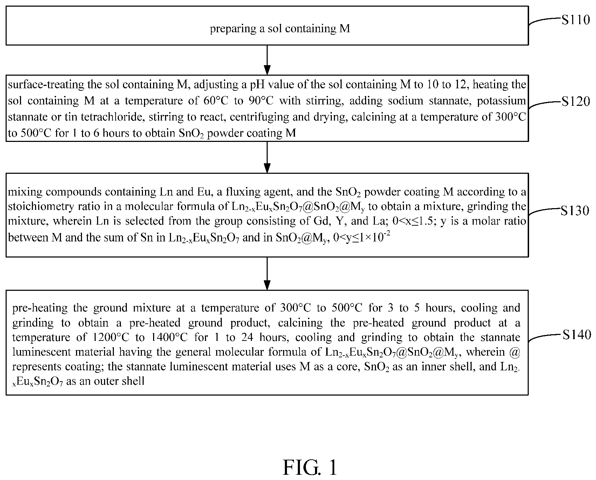

Referring to FIG. 1, an embodiment of a method of preparing a stannate luminescent material includes the following steps:

In step S110, a sol containing M is prepared.

M is at least one metal nanoparticles selected from the group consisting of Ag, Au, Pt, Pd and Cu.

The step of preparing the sol containing M includes: mixing and reacting a salt solution of at least one of Ag, Au, Pt, Pd, and Cu, an additive, and a reducing agent to obtain the sol containing M nanoparticles. In order to guarantee that the sol containing M is obtained, the reaction time is preferably ranged from 10 to 45 minutes to save energy.

The salt solution of Ag, Au, Pt, Pd, and Cu can be a chloride solution, a nitrate solution or the like of the Ag, Au, Pt, Pd, and Cu. The concentration of the salt solution of Ag, Au, Pt, Pd, and Cu can be determined according to the actual needs, preferably ranges from $1\times10^{-3}$mol/L to $5\times10^{-2}$mol/L.

The additive is at least one selected from the group consisting of polyvinyl pyrrolidone, sodium citrate, cetyl trimethyl ammonium bromide, sodium lauryl sulfate, and sodium dodecyl sulfate. The concentration of additive in the sol containing M ranges from $1\times10^{-4}$g/mL to $5\times10^{-2}$g/mL.

The reducing agent is at least one selected from the group consisting of hydrazine hydrate, ascorbic acid, sodium citrate, and sodium borohydride. The reducing agent is firstly formulated into an aqueous solution with a concentration of $1\times10^{-4}$mol/L to 1mol/L, then is mixed and reacted with the salt solution of at least one of Ag, Au, Pt, Pd, and Cu, and the additive.

A molar ratio of the reducing agent to a metal ion in the salt solution of at least one of Ag, Au, Pt, Pd, and Cu ranges from 3.6:1 to 18:1.

Under the effect of the reducing agent and additives, Ag, Au, Pt, Pd or Cu ions are reduced to Ag, Au, Pt, Pd or Cu metal nanoparticles and dispersed in a solvent, such that the sol containing M is obtained.

In step S120, the sol containing M is surface-treated, a pH value of the sol containing M is adjusted to 10 to 12, the sol containing M is then heated at a temperature of 60°C to 90°C with stirring, sodium stannate, potassium stannate or tin tetrachloride is added, stirring to react, centrifuging and drying, calcining at a temperature of 300°C to 500°C for 1 to 6 hours to obtain $SnO_2$ powder coating M.

For ease of coating, the sol containing M obtained from the step S110 is firstly surface-treated to form a stable $SiO_2$ powder coating M, referred hereafter as $SiO_2@M$.

Specifically, the step of surface-treating the sol containing M includes: adding the sol containing M to a polyvinyl pyrrolidone (PVP) aqueous solution having a concentration of 0.005g/ml to 0.1g/ml and stirring for 8 to 18 hours.

The pH value of the surface-treated sol containing M is adjusted to 10 to 12 using sodium hydroxide (NaOH) or ammonia ($NH_3 \cdot H_2O$), the sol containing M is then heated in a water bath at a constant temperature of 60°C to 90°C with stirring. After adding sodium stannate ($Na_2SnO_3$), potassium stannate ($K_2SnO_3$) or tin tetrachloride ($SnCl_4$) rapidly with stirring, the system is reacted, centrifuged and dried to remove water and solvent, calcined to obtain the $SnO_2$ powder coating M.

The reaction and stirring time is preferably 1 to 5 hours. During the reaction, sodium stannate ($Na_2SnO_3$), potassium stannate ($K_2SnO_3$) or tin tetrachloride ($SnCl_4$) hydrolyzes to form tin hydroxide $Sn(OH)_4$, which is calcined to obtain $SnO_2$. The $SnO_2$ coats on the surface of M to form the $SnO_2$ powder coating M. For example, the reaction equation using sodium stannate ($Na_2SnO_3$) is as shown as follows:

$$NaSnO_3+H_2O+CO_2 \rightarrow Sn(OH)_4+Na_2CO_3;$$

$$Sn(OH)_4 \rightarrow SnO_2+2H_2O.$$

The reaction mechanism using potassium tin ($K_2SnO_3$) is the same as that of sodium stannate ($Na_2SnO_3$).

The reaction equation using tin tetrachloride ($SnCl_4$) is as shown as follows:

$$SnCl_4 + 4OH^- \rightarrow Sn(OH)_4 + 4Cl^-;$$

$$Sn(OH)_4 \rightarrow SnO_2 + 2H_2O.$$

In the step of calcining the tin hydroxide $Sn(OH)_4$ to obtain tin oxide ($SnO_2$), the calcining temperature ranges from 300°C to 500°C, the calcining time is 1 to 6 hours.

In step S130, compounds containing Ln and Eu, a fluxing agent, and the $SnO_2$ powder coating M are mixed according to a stoichiometry ratio in a molecular formula of $Ln_{2-x}Eu_xSn_2O_7@SnO_2@M_y$ to obtain a mixture, the mixture is ground, wherein Ln is selected from the group consisting of Gd, Y, and La; $0<x\leq1.5$; y is a molar ratio between M and the sum of Sn in $Ln_{2-x}Eu_xSn_2O_7$ and in $SnO_2@M_y$, $0<y\leq1\times10^{-2}$.

The compounds containing Ln can be oxides, carbonates, nitrates, oxalates and chlorides of Ln. For example, the compounds containing Ln can be yttrium carbonate ($Y_2(CO_3)_3$), yttrium oxide ($Y_2O_3$), or the like.

The compounds containing Eu can be oxides, carbonates, nitrates, oxalates and chlorides of Eu. For example, the compounds containing Eu can be europium carbonate ($Eu_2(CO_3)_3$), europium oxide ($Eu_2O_3$), or the like.

The mixture of compounds containing Ln and Eu, and the $SnO_2$ powder coating M are used as raw materials to generate stannate luminescent material. The fluxing agent can cause a more sufficient reaction, and the reaction temperature can be reduced, thereby reducing energy consumption.

The grinding of the compounds containing Ln and Eu, the fluxing agent, and the $SnO_2$ powder coating M can promote the chemical reaction of the raw materials, and is in favor of obtaining the product in a smaller particle size.

Preferably, the fluxing agent is boric acid ($H_3BO_3$) or magnesium fluoride ($MgF_2$). A percentage of the molar amount of the fluxing agent to the molar amount of the stannate luminescent material is 0.01% to 5%.

In step S140, the ground mixture is pre-heated at a temperature of 300°C to 500°C for 3 to 5 hours, cooling and grinding to obtain a pre-heated ground product, calcining the pre-heated ground product at a temperature of 1200°C to 1400°C for 1 to 24 hours, cooling and grinding to obtain the stannate luminescent material having the general molecular formula of $Ln_{2-x}Eu_xSn_2O_7@SnO_2@M_y$, wherein @ represents coating; the stannate luminescent material uses M as a core, $SnO_2$ as an inner shell, and $Ln_{2-x}Eu_xSn_2O_7$ as an outer shell.

The main effect of calcination is to trigger the chemical reaction between the components of the raw materials, thus forming a matrix with a lattice structure. Therefore, the activator can enter the matrix and be positioned at the gap in the matrix lattice or replace the lattice atom. The preheating can facilitate the formation of crystal lattice during calcinations.

After calcining, cooling, and grinding, the stannate luminescent material with a smaller particle size and more uniform particle size distribution is obtained.

The preparation method of the stannate luminescent material uses metal nanoparticles M as the core, and coats the surface of M with $SnO_2$ to form the inner shell using a sol method, and then coats the surface of $SnO_2$ with stannate composition $Ln_{2-x}Eu_xSn_2O_7$ to form the outer shell using high-temperature solid-phase method, such that the stannate luminescent material with a core-shell structure is obtained. The prepared stannate luminescent materials have many advantages such as high luminous intensity, good stability and excellent luminescence performance.

The preparation method of the stannate luminescent material has a simple process, low equipment requirements, no pollution, and is easy to control, which is suitable for industrial production with a broad application prospects.

The specific examples are described below.

Example 1

This example describes a process of preparation of $Y_{1.98}Eu_{0.02}Sn_2O_7@SnO_2@Pd_{1\times10^{-5}}$ by using high-temperature solid-phase method.

Preparation of sol containing Pd nanoparticles was described below.

0.22mg of palladium chloride ($PdCl_2 \cdot 2H_2O$) was dissolved in 19mL of deionized water. After the palladium chloride was fully dissolved, 11.0mg of sodium citrate and 4.0mg of sodium lauryl sulfate were weighed and dissolved into the palladium chloride aqueous solution under magnetic stirring. 3.8mg of sodium borohydride was weighed and dissolved into 10mL of deionized water to obtain a sodium borohydride reducing solution with a concentration of $1\times10^{-2}$mol/L. Under magnetic stirring, 1mL of sodium borohydride solution with a concentration of $1\times10^{-2}$mol/L was fast added to the palladium chloride aqueous solution. After reaction for 20 minutes, 20mL of sol containing Pd nanoparticles was obtained with a Pd content of $5\times10^{-5}$mol/L.

Preparation of $SiO_2@Pd$ was described below.

1.5mL of sol containing Pd nanoparticles ($5\times10^{-5}$mol/L) was pipetted and placed in a beaker, 8mL of PVP solution (0.005g/mL) was added, magnetically stirred for 16 hours to obtain a surface treated sol containing Pd nanoparticles. The pH value of the surface treated sol containing Pd nanoparticles was adjusted to 10.5 using NaOH. After stirring for 10 minutes, the sol was transferred to a 60°C water bath with constant temperature heating and stirring, 25mL of $Na_2SnO_3$ solution (0.3mol/L) was rapidly added with stirring. After stirring for 2 hours, the sol was centrifuged and dried, calcined at 500°C for 1 hour to obtain $SnO_2$ powder coating Pd, i.e. $SiO_2@Pd$.

Preparation of $Y_{1.98}Eu_{0.02}Sn_2O_7@SnO_2@Pd_{1\times10-5}$ was described below.

0.8856g of yttrium carbonate ($Y_2(CO_3)_3$), 0.0242g of europium carbonate ($Eu_2(CO_3)_3$), 0.9042g of $SnO_2$ powder coating Pd, and 0.0077g of boric acid ($H_3BO_3$) were weighed according to the stoichiometry ratio. After all the raw materials were placed in an agate mortar and thoroughly ground, they were placed into a corundum crucible and pre-sintered at 400°C for 4 hours, then cooled to room temperature, thoroughly ground again. The ground product was finally calcined at 1200°C for 10 hours, cooled to room temperature, ground to obtain the stannate luminescent material $Y_{1.98}Eu_{0.02}Sn_2O_7@SnO_2@Pd_{1\times10-5}$.

Example 2

This example describes a process of preparation of $Y_{1.9}Eu_{0.1}Sn_2O7@SnO_2@Au_{1.5\times10-4}$ by using high-temperature solid-phase method.

0.21mg of chloroauric acid ($AuCl \cdot HCl \cdot 4H_2O$) was dissolved in 16.8mL of deionized water. After the chloroauric acid was fully dissolved, 14mg of sodium citrate and 6mg of cetyl trimethyl ammonium bromide were weighed and dissolved into the chloroauric acid aqueous solution under magnetic stirring. 1.9mg of sodium borohydride and 17.6mg of ascorbic acid were weighed and dissolved into 10mL of deionized water, respectively, to obtain a 10mL of sodium borohydride solution with a concentration of $5\times10^{-3}$mol/L and a 10mL of ascorbic acid solution with a concentration of $1\times10^{-2}$mol/L. Under magnetic stirring, 0.08mL of sodium borohydride solution was firstly added to the chloroauric acid aqueous solution, after stirring for 5 minutes, 3.12 mL of ascorbic acid solution with a concentration of $1\times10^{-2}$mol/L was then added to the chloroauric acid aqueous solution. After reaction for 30 minutes, 20mL of sol containing Au nanoparticles was obtained with an Au content of $5\times10^{-5}$ mol/L.

Preparation of $SiO_2@Au$ was described below.

15mL of sol containing Au nanoparticles ($5\times10^{-5}$mol/L) was pipetted and placed in a beaker, 2mL of PVP solution (0.1g/mL) was added, magnetically stirred for 8 hours to obtain a surface treated sol containing Au nanoparticles. The pH value of the surface treated sol containing Au nanoparticles was adjusted to 12 using NaOH. After stirring for 5 minutes, the sol was transferred to a 90°C water bath with constant temperature heating and stirring, 20mL of $K_2SnO_3$ solution (0.25mol/L) was rapidly added with stirring. After stirring for 3 hours, the sol was centrifuged and dried, calcined at 300°C for 6 hours to obtain $SnO_2$ powder coating Au, i.e. $SiO_2@Au$.

Preparation of $Y_{1.9}Eu_{0.1}Sn_2O_7@SnO_2@Au_{1.5\times10-4}$ was described below.

0.5363g of yttrium oxide ($Y_2O_3$), 0.0440g of europium oxide ($Eu_2O_3$), $SnO_2$ powder coating Au, and 0.0077g of boric acid ($H_3BO_3$) were weighed according to the stoichiometry ratio. After all the raw materials were placed in an agate mortar and thoroughly ground, they were placed into a corundum crucible and pre-sintered at 500°C for 3 hours, then cooled to room temperature, thoroughly ground again. The ground product was finally calcined at 1400°C for 5 hours, cooled to room temperature, ground to obtain the stannate luminescent material $Y_{1.9}Eu_{0.1}Sn_2O_7@SnO_2@Au_{1.5\times10-4}$.

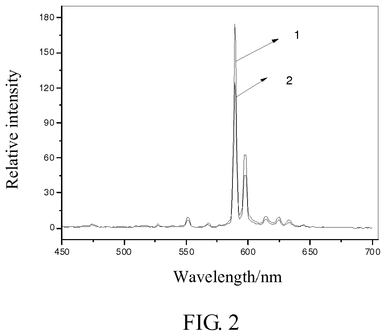

FIG. 2 is a graphical representation of cathodoluminescence spectrum under a voltage of 1.5kV of the luminescent material of $Y_{1.9}Eu_{0.1}Sn_2O_7@SnO_2@Au_{1.5\times10-4}$ coating Au nanoparticles prepared in accordance with Example 2, and the luminescent material of $Y_{1.9}Eu_{0.1}Sn_2O_7@SnO_2$ without coating metal nanoparticles. It can be seen from FIG. 2 that, at an emission peak of 590nm, the emission intensity of luminescent material of $Y_{1.9}Eu_{0.1}Sn_2O_7@SnO_2@Au_{1.5\times10-4}$ coating Au nanoparticles is enhanced by 40% comparing to luminescent material of $Y_{1.9}Eu_{0.1}Sn_2O_7@SnO_2$ without coating metal nanoparticles.

Example 3

This example describes a process of preparation of $Y_{1.5}Eu_{0.5}Sn_2O_7@SnO_2@Ag_{2.5\times10-4}$ by using high-temperature solid-phase method.

Preparation of sol containing Ag nanoparticles was described below.

3.4mg of silver nitrate ($AgNO_3$) was dissolved in 18.4mL of deionized water. After the silver nitrate was fully dissolved, 42mg of sodium citrate was weighed and dissolved into the silver nitrate aqueous solution under magnetic stirring. 5.7mg of sodium borohydride was weighed and dissolved into 10mL of deionized water to obtain a 10mL of sodium borohydride solution with a concentration of $1.5\times10^{-2}$mol/L. Under magnetic stirring, 1.6mL of sodium borohydride solution ($1.5\times10^{-2}$mol/L) was added to the silver nitrate aqueous solution. After reaction for 10 minutes, 20mL of sol containing Ag nanoparticles was obtained with an Ag content of $1\times10^{-3}$mol/L.

Preparation of $SiO_2$@Ag was described below.

1.2mL of sol containing Ag nanoparticles ($1\times10^{-3}$mol/L) was pipetted and placed in a beaker, 10mL of PVP solution (0.01g/mL) was added, magnetically stirred for 12 hours to obtain a surface treated sol containing Ag nanoparticles. The pH value of the surface treated sol containing Ag nanoparticles was adjusted to 11 using ammonia. After stirring for 5 minutes, the sol was transferred to an 80°C water bath with constant temperature heating and stirring, 15mL of $SnCl_4$ solution (0.32mol/L) was rapidly added with stirring. After stirring for 3 hours, the sol was centrifuged and dried, calcined at 400°C for 4 hours to obtain $SnO_2$ powder coating Ag, i.e. $SiO_2$@Ag.

Preparation of $Y_{1.5}Eu_{0.5}Sn_2O_2$@$SnO_2$@$Ag_{2.5\times10-4}$ was described below.

0.8284g of yttrium oxalate $Y2(C_2O_4)_3$, 0.2129g of europium oxalate $Eu_2(C_2O_4)_3$, 0.8288g of $SnO_2$ powder coating Ag, and 0.0015g of boric acid ($H_3BO_3$) were weighed according to the stoichiometry ratio. After all the raw materials were placed in an agate mortar and thoroughly ground, they were placed into a corundum crucible and pre-sintered at 500°C for 2 hours, then cooled to room temperature, thoroughly ground again. The ground product was finally calcined at 1300°C for 5 hours, cooled to room temperature, ground to obtain the stannate luminescent material $Y_{1.5}Eu_{0.5}Sn_2O_7$@$SnO_2$@$Ag_{2.5\times10-4}$.

Example 4

This example describes a process of preparation of $Gd_{1.0}Eu_{1.0}Sn_2O_7$@$SnO_2$@$Pt_{5\times10-3}$ by using high-temperature solid-phase method.

Preparation of sol containing Pt nanoparticles was described below.

25.9mg of chloroplatinic acid ($H_2PtCl_6$•$6H_2O$) was dissolved in 17mL of deionized water. After the chloroplatinic acid was fully dissolved, 40.0mg of sodium citrate and 60.0mg of sodium lauryl sulfate were weighed and dissolved into the chloroplatinic acid aqueous solution under magnetic stirring. 1.9mg of sodium borohydride was weighed and dissolved into 10mL of deionized water to obtain 10 mL of sodium borohydride aqueous solution with a concentration of $5\times10^{-3}$mol/L. 10mL of hydrazine hydrate solution ($5\times10^{-2}$mol/L) was prepared at the same time. Under magnetic stirring, 0.4mL of sodium borohydride solution was added dropwise to the chloroplatinic acid aqueous solution and stirred for 5 minutes, then 2.6mL of hydrazine hydrate ($5\times10^{-2}$mol/L) was added dropwise to the chloroplatinic acid aqueous solution. After reaction for 40 minutes, 10mL of sol containing Pt nanoparticles was obtained with a Pt content of $2.5\times10^{-3}$mol/L.

Preparation of $SiO_2$@Pt was described below.

8mL of sol containing Pt nanoparticles ($2.5\times10^{-3}$mol/L) was pipetted and placed in a beaker, 4mL of PVP solution (0.02g/mL) was added, magnetically stirred for 18 hours to obtain a surface treated sol containing Pt nanoparticles. The pH value of the surface treated sol containing Pt nanoparticles was adjusted to 10.5 using ammonia. After stirring for 5 minutes, the sol was transferred to a 70°C water bath with constant temperature heating and stirring, 10mL of $Na_2SnO_3$ solution (0.4mol/L) was rapidly added with stirring. After stirring for 5 hours, the sol was centrifuged and dried, calcined at 300°C for 4 hours to obtain $SnO_2$ powder coating Pt, i.e. $SiO_2$@Pt.

Preparation of $Gd_{1.0}Eu_{1.0}Sn_2O_7$@$SnO_2$@$Pt_{5\times10-3}$ was described below.

1.1284g of gadolinium nitrate ($Gd(NO_3)_3$·$6H_2O$), 1.1152g of europium nitrate ($Eu(NO_3)_3$·$6H_2O$), 0.7535g of $SnO_2$ powder coating Pt, and 0.0031g of magnesium fluoride ($MgF_2$) were weighed according to the stoichiometry ratio. After all the raw materials were placed in an agate mortar and thoroughly ground, they were placed into a corundum crucible and pre-sintered at 300°C for 5 hours, then cooled to room temperature, thoroughly ground again. The ground product was finally calcined at 1300°C for 24 hours, cooled to room temperature, ground to obtain the stannate luminescent material $Gd_{1.0}Eu_{1.0}Sn_2O_7$@$SnO_2$@$Pt_{5\times10-3}$.

Example 5

This example describes a process of preparation of $La_{0.5}Eu_{1.5}Sn_2O_7$@$SnO_{2@}Cu_{1\times10-4}$ by using high-temperature solid-phase method.

Preparation of sol containing Cu nanoparticles was described below.

1.6mg of copper nitrate was dissolved in 16mL of ethanol. After the copper nitrate was fully dissolved, 12mg of PVP was added with stirring. 0.4mg of sodium borohydride was dissolved into 10mL of ethanol to obtain a sodium borohydride alcoholic solution with a concentration of $1\times10^{-3}$mol/L. 4mL of sodium borohydride alcoholic solution was added dropwise to the copper nitrate solution. After stirring and reacting for 10 minutes, 20mL of sol containing Cu nanoparticles was obtained with a Cu content of $4\times10^{-4}$mol/L.

Preparation of $SiO_2$@Cu was described below.

1.5mL of sol containing Cu nanoparticles ($4\times10^{-4}$mol/L) was pipetted and placed in a beaker, 5mL of PVP solution (0.03g/mL) was added, magnetically stirred for 10 hours to obtain a surface treated sol containing Cu nanoparticles. The pH value of the surface treated sol containing Cu nanoparticles was adjusted to 10.5 using NaOH. After stirring for 15 minutes, the sol was transferred to a 60°C water bath with constant temperature heating and stirring, 30mL

of $Na_2SnO_3$ solution (0.2mol/L) was rapidly added with stirring. After stirring for 1 hour, the sol was centrifuged and dried, calcined at 300°C for 5 hours to obtain $SnO_2$ powder coating Cu, i.e. $SiO_2@Cu$.

Preparation of $La_{0.5}Eu_{1.5}Sn_2O_7@SnO_2@Cu_{1\times10-4}$ was described below.

0.3066g of lanthanum chloride ($LaCl_3$), 0.9686g of europium chloride ($EuCl_3$), 0.7535g of $SnO_2$ powder coating Cu, and 0.0046g of boric acid ($H_3BO_3$) were weighed according to the stoichiometry ratio. After all the raw materials were placed in an agate mortar and thoroughly ground, they were placed into a corundum crucible and pre-sintered at 500°C for 5 hours, then cooled to room temperature, thoroughly ground again. The ground product was finally calcined at 1200°C for 12 hours, cooled to room temperature, ground to obtain the stannate luminescent material $La_{0.5}Eu_{1.5}Sn_2O_7@SnO_2@Cu_{1\times10-4}$.

Example 6

This example describes a process of preparation of $La_{1.5}Eu_{0.5}Sn_2O_7@SnO_2@(Ag_{0.5}/Au_{0.5})_{1.25\times10-3}$ by using high-temperature solid-phase method.

Preparation of sol containing $Ag_{0.5}/Au_{0.5}$ nanoparticles was described below.

6.2mg of chloroauric acid ($AuCl_3\cdot HCl\cdot 4H_2O$) and 2.5mg of $AgNO_3$ were dissolved in 28mL of deionized water. After they were fully dissolved, 22mg of sodium citrate and 20mg of PVP were weighed and added to the mixture solution under magnetic stirring. 5.7mg of sodium borohydride was dissolved into 10mL of deionized water to obtain a sodium borohydride aqueous solution with a concentration of $1.5\times10^{-2}$mol/L. 2mL of sodium borohydride aqueous solution ($1.5\times10^{-2}$mol/L) was added to the mixture solution under a magnetic stirring environment. After reacting for 20 minutes, 30mL of sol containing $Ag_{0.5}/Au_{0.5}$ nanoparticles was obtained with a sum metal (Ag+Au) concentration of $1\times10^{-3}$mol/L.

Preparation of $SiO_2@(Ag_{0.5}/Au_{0.5})$ was described below.

5mL of sol containing $Ag_{0.5}/Au_{0.5}$ nanoparticles (sum metal (Ag+Au) concentration of $1\times10^{-3}$mol/L) was pipetted and placed in a beaker, 10mL of PVP solution (0.1g/mL) was added, magnetically stirred for 12 hours to obtain a surface treated sol containing $Ag_{0.5}/Au_{0.5}$ nanoparticles. The pH value of the surface treated sol containing $Ag_{0.5}/Au_{0.5}$ nanoparticles was adjusted to 10.5 using NaOH. After stirring for 15 minutes, the sol was transferred to a 60°C water bath with constant temperature heating and stirring, 30mL of $Na_2SnO_3$ solution (0.2mol/L) was rapidly added with stirring. After stirring for 1 hour, the sol was centrifuged and dried, calcined at 500°C for 1 hour to obtain $SnO_2$ powder coating Ag and Au, i.e. $SiO_2@(Ag_{0.5}/Au_{0.5})$.

Preparation of $La_{1.5}Eu_{0.5}Sn_2O_7@SnO_2@(Ag_{0.5}/Au_{0.5})_{1.25\times10-3}$ was described below.

0.6109g of lanthanum oxide ($La_2O_3$), 0.2200g of europium oxide ($Eu_2O_3$), 0.7636g of $SnO_2$ powder coating Ag and Au, and 0.0046g of boric acid ($H_3BO_3$) were weighed according to the stoichiometry ratio. After all the raw materials were placed in an agate mortar and thoroughly ground, they were placed into a corundum crucible and pre-sintered at 400°C for 5 hours, then cooled to room temperature, thoroughly ground again. The ground product was finally calcined at 1400°C for 12 hours, cooled to room temperature, ground to obtain the stannate luminescent material $La_{1.5}Eu_{0.5}Sn_2O_7@SnO_2@(Ag_{0.5}/Au_{0.5})_{1.25\times10-3}$.

**Claims**

1. A stannate luminescent material, having a general molecular formula of $Ln_{2-x}Eu_xSn_2O_7@SnO_2@M_y$,
   wherein Ln is selected from the group consisting of Gd, Y, and La;
   M is at least one metal nanoparticles selected from the group consisting of Ag, Au, Pt, Pd, and Cu;

$$0<x\leq1.5;$$

   y is a molar ratio between M and the sum of Sn in $Ln_{2-x}Eu_xSn_2O_7$ and in $SnO_2@M_y$,

$$0<y\leq1\times10^{-2};$$

   @ represents coating; the stannate luminescent material uses M as a core, $SnO_2$ as an inner shell, and $Ln_{2-x}Eu_xSn_2O_7$ as an outer shell.

2. The stannate luminescent material according to claim 1, wherein $0.02\leq x\leq1.0$.

3. The stannate luminescent material according to claim 1, wherein $1\times10^{-5}\leq y\leq5\times10^{-3}$.

4. A method of preparing a stannate luminescent material, comprising the following steps:

preparing a sol containing M, wherein M is at least one metal nanoparticles selected from the group consisting of Ag, Au, Pt, Pd and Cu;

surface-treating the sol containing M, adjusting a pH value of the sol containing M to 10 to 12, heating the sol containing M at a temperature of 60°C to 90°C with stirring, adding sodium stannate, potassium stannate or tin tetrachloride, stirring to react, centrifuging and drying, calcining at a temperature of 300°C to 500°C for 1 to 6 hours to obtain $SnO_2$ powder coating M;

mixing compounds containing Ln and Eu, a fluxing agent, and the $SnO_2$ powder coating M according to a stoichiometry ratio in a molecular formula of $Ln_{2-x}Eu_xSn_2O_7@SnO_2@M_y$ to obtain a mixture, grinding the mixture, wherein Ln is selected from the group consisting of Gd, Y, and La; $0<x\leq1.5$; y is a molar ratio between M and the sum of Sn in $Ln_{2-x}Eu_xSn_2O_7$ and in $SnO_2@M_y$, $0<y\leq1\times+10^{-2}$; and

pre-heating the ground mixture at a temperature of 300°C to 500°C for 3 to 5 hours, cooling and grinding to obtain a pre-heated ground product, calcining the pre-heated ground product at a temperature of 1200°C to 1400°C for 1 to 24 hours, cooling and grinding to obtain the stannate luminescent material having the general molecular formula of $Ln_{2-x}Eu_xSn_2O_7@SnO_2@M_y$, wherein @ represents coating; the stannate luminescent material uses M as a core, $SnO_2$ as an inner shell, and $Ln_{2-x}Eu_xSn_2O_7$ as an outer shell.

5. The method of preparing the stannate luminescent material according to claim 4, wherein the preparing the sol containing M comprises:

mixing and reacting a salt solution of at least one of Ag, Au, Pt, Pd, and Cu, an additive, and a reducing agent for 10 minutes to 45 minutes to obtain the sol containing M nanoparticles.

6. The method of preparing the stannate luminescent material according to claim 5, wherein a concentration of the salt solution of at least one of Ag, Au, Pt, Pd, and Cu ranges from $1\times10^{-3}$mol/L to $5\times10^{-2}$mol/L.

7. The method of preparing the stannate luminescent material according to claim 5, wherein the additive is at least one selected from the group consisting of polyvinyl pyrrolidone, sodium citrate, cetyl trimethyl ammonium bromide, sodium lauryl sulfate, and sodium dodecyl sulfate; a concentration of additive in the sol containing M ranges from $1\times10^{-4}$g/mL to $5\times10^{-2}$g/mL.

8. The method of preparing the stannate luminescent material according to claim 5, wherein the reducing agent is at least one selected from the group consisting of hydrazine hydrate, ascorbic acid, sodium citrate, and sodium borohydride; a molar ratio of the reducing agent to a metal ion in the salt solution of at least one of Ag, Au, Pt, Pd, and Cu ranges from 3.6:1 to 18:1.

9. The method of preparing the stannate luminescent material according to claim 4, wherein the fluxing agent is boric acid or magnesium fluoride.

10. The method of preparing the stannate luminescent material according to claim 4 or 9, wherein a percentage of the molar amount of the fluxing agent to the molar amount of the stannate luminescent material is 0.01% to 5%.

**Patentansprüche**

1. Stannat-Lumineszenzmaterial mit der allgemeinen molekularen Formel $Ln_{2-x}Eu_xSn_2O_7@SnO_2@M_y$, wobei

Ln ausgewählt ist aus der Gruppe bestehend aus Gd, Y und La,
M Metallnanopartikel mindestens eines aus der Gruppe bestehend aus Ag, Au, Pt, Pd und Cu ausgewählten Elements sind,

$$0 < x \leq 1{,}5$$

ist,

Y ein Molverhältnis zwischen M und der Summe von Sn in $Ln_{2-x}E-u_xSn_2O_7$ ist und in $SnO_2@M_y$ ist, wobei $0 < y \leq 1 \times 10^{-2}$ ist,

@ eine Beschichtung darstellt, wobei das Stannat-Lumineszenzmaterial M als einen Kern, $SnO_2$ als eine Innenschale und $Ln_{2-x}Eu_xSn_2O_7$ als eine Außenschale verwendet.

2. Stannat-Lumineszenzmaterial nach Anspruch 1, wobei $0{,}02 \leq x \leq 1{,}0$ ist.

3. Stannat-Lumineszenzmaterial nach Anspruch 1, wobei $1 \times 10^{-5} \leq y \leq 5 \times 10^{-3}$ ist.

4. Verfahren zum Herstellen eines Stannat-Lumineszenzmaterials, mit den folgenden Schritten:

Herstellen eines M enthaltenden Sols, wobei M Metallnanopartikel mindestens eines aus der Gruppe bestehend aus Ag, Au, Pt, Pd und Cu ausgewählten Elements sind;

Oberflächenbehandeln des M enthaltenden Sols, Einstellen eines pH-Wertes des M enthaltenden Sols auf 10 bis 12, Erwärmen des M enthaltenden Sols bei einer Temperatur von 60°C bis 90°C unter Rühren, Zugeben von Natriumstannat, Kaliumstannat oder Zinn-Tetrachlorid, Rühren bis zur Reaktion, Zentrifugieren und Trocknen, Kalzinieren bei einer Temperatur von 300°C bis 500°C für 1 bis 6 Stunden, um eine $SnO_2$-Pulverbeschichtung M zu erhalten;

Mischen von Verbindungen, die Ln und Eu enthalten, eines Flussmittels und der $SnO_2$-Pulverbeschichtung M gemäß einem stöchiometrischen Verhältnis in einer Molekularformel von $Ln_{2-x}Eu_xSn_2O_7@SnO_2@M_y$, um ein Gemisch zu erhalten, Mahlen des Gemischs, wobei Ln ausgewählt ist aus der Gruppe bestehend aus Gd, Y und La, $0 < \times \leq 1{,}5$ ist, y ein Molverhältnis zwischen M und der Summe von Sn in $Ln_{2-x}Eu_xSn_2O_7$ und in $SnO_2@M_y$ ist, und $0 < y \leq 1 \times 10^{-2}$ ist; und

Vorerwärmen des gemahlenen Gemischs bei einer Temperatur von 300°C bis 500°C für 3 bis 5 Stunden, Abkühlen und Mahlen, um ein vorerwärmtes gemahlenes Produkt zu erhalten, Kalzinieren des vorerwärmten gemahlenen Produkts bei einer Temperatur von 1200°C bis 1400° C für 1 bis 24 Stunden, Abkühlen und Mahlen, um das Stannat-Lumineszenzmaterial mit der allgemeinen molekularen Formel $Ln_{2-x}Eu_xSn_2O_7@SnO_2@M_y$ zu erhalten, wobei @ eine Beschichtung darstellt, wobei das Stannat-Lumineszenzmaterial M als einen Kern, $SnO_2$ als eine Innenschale und $Ln_{2-x}E-u_xSn_2O_7$ als eine Außenschale verwendet.

5. Verfahren nach Anspruch 4, wobei die Herstellung des M enthaltenden Sols aufweist:

Mischen und Umsetzen einer Salzlösung mindestens eines Elements unter Ag, Au, Pt, Pd und Cu, eines Zusatzstoffs und eines Reduktionsmittels für 10 Minuten bis 45 Minuten, um das M-Nanopartikel enthaltende Sol zu erhalten.

6. Verfahren nach Anspruch 5, wobei die Konzentration der Salzlösung mindestens eines Elements unter Ag, Au, Pt, Pd und Cu im Bereich von $1 \times 10^{-3}$ mol/l bis $5 \times 10^{-2}$ mol/l liegt.

7. Verfahren nach Anspruch 5, wobei der Zusatzstoff mindestens eine aus der Gruppe bestehend aus Polyvinylpyrrolidon, Natriumcitrat, Cetyltrimethylammoniumbromid, Natriumlaurylsulfat und Natriumdodecylsulfat ausgewählte Komponente ist, wobei die Konzentration des Zusatzstoffs in dem M enthaltenden Sol im Bereich von $1 \times 10^{-4}$ g/ml bis $5 \times 10^{-2}$ g/ml liegt.

8. Verfahren nach Anspruch 5, wobei das Reduktionsmittel mindestens eine aus der Gruppe bestehend aus Hydrazinhydrat, Ascorbinsäure, Natriumcitrat und Natriumborhydrid ausgewählte Komponente ist, wobei ein Molverhältnis des Reduktionsmittels zu einem Metallion in der Salzlösung mindestens eines Elements unter Ag, Au, Pt, Pd und Cu im Bereich von 3,6:1 bis 18:1 liegt.

9. Verfahren nach Anspruch 4, wobei das Flussmittel Borsäure oder Magnesiumfluorid ist.

10. Verfahren nach Anspruch 4 oder 9, wobei ein Prozentsatz der molaren Menge des Flussmittels zur molaren Menge des Stannat-Lumineszenzmaterials 0,1% bis 5% beträgt.

## Revendications

1. Matériau luminescent de stannate, ayant une formule moléculaire générale $Ln_{2-x}Eu_xSn_2O_7@SnO_2@M_y$, dans lequel Ln est choisi dans le groupe constitué par Gd, Y et La ;
M est au moins une nanoparticules métalliques choisies dans le groupe constitué par Ag, Au, Pt, Pd et Cu ;

$$0 < x \leq 1,5 \; ;$$

y est un rapport molaire entre M et la somme de Sn dans $Ln_{2-x}Eu_xSn_2O_7$ et dans $SnO_2@M_y$, $0 < y \leq 1 \times 10^{-2}$;
@ représente revêtement ; le matériau luminescent de stannate utilise M comme noyau, $SnO_2$ comme enveloppe interne et $Ln_{2-x}Eu_xSn_2O_7$ comme enveloppe externe.

2. Matériau luminescent de stannate selon la revendication 1, dans lequel $0.02 \leq x \leq 1,0$.

3. Matériau luminescent de stannate selon la revendication 1, dans lequel $1 \times 10^{-5} \leq y \leq 5 \times 10^{-3}$.

4. Procédé de préparation d'un matériau luminescent de stannate, comprenant les étapes suivantes :

préparation d'un sol contenant M, dans lequel M est au moins une nanoparticules métalliques choisies dans le groupe constitué par Ag, Au, Pt, Pd et Cu ;
traitement de surface du sol contenant M, ajustement de la valeur du pH du sol contenant M à 10 à 12, chauffage du sol contenant M à une température de 60°C à 90°C sous agitation, ajout de stannate de sodium, de stannate de potassium ou de tétrachlorure d'étain, agitation pour faire réagir, centrifugation et séchage, calcination à une température de 300°C à 500°C pendant 1 à 6 heures pour obtenir de la poudre $SnO_2$ revêtant M;
mélange des composés contenant Ln et Eu, d'un fondant et de la poudre $SnO_2$ revêtant M selon un rapport stoechiométrique dans une formule moléculaire $Ln_{2-x}Eu_xSn_2O_7@SnO_2@M_y$ pour obtenir un mélange, broyage du mélange, dans lequel Ln est choisi dans le groupe constitué de Gd, Y et La ; $0 < x \leq 1,5$; y est un rapport molaire entre M et la somme de Sn dans $Ln_{2-x}Eu_xSn_2O_7$ et dans $SnO_2@M_y$,

$$0 < y \leq 1 \times 10^{-2} \; ;$$

et
préchauffage du mélange broyé à une température de 300°C à 500°C pendant 3 à 5 heures, refroidissement et broyage pour obtenir un produit brouillé préchauffé, calcination du produit brouillé préchauffé à une température de 1200°C à 1400°C pendant 1 à 24 heures, refroidissement et broyage pour obtenir le matériau luminescent de stannate ayant la formule moléculaire générale $Ln_{2-x}Eu_xSn_2O_7@SnO_2@M_y$, dans lequel @ représente revêtement ; le matériau luminescent de stannate utilise M comme noyau, $SnO_2$ comme enveloppe interne et $Ln_{2-x}Eu_xSn_2O_7$ comme enveloppe externe.

5. Procédé de préparation d'un matériau luminescent de stannate selon la revendication 5, dans lequel la préparation du sol contenant M comprend : mélange et réaction d'une solution saline d'au moins un élément parmi Ag, Au, Pt, Pd et Cu, un additif et un agent réducteur pendant 10 minutes à 45 minutes pour obtenir le sol contenant des nanoparticules M.

6. Procédé de préparation d'un matériau luminescent de stannate selon la revendication 5, dans lequel une concentration de la solution saline d'au moins un élément parmi Ag, Au, Pt, Pd et Cu est de $1 \times 10^{-3}$ mol/L à $5 \times 10^{-2}$ mol/L.

7. Procédé de préparation d'un matériau luminescent de stannate selon la revendication 5, dans lequel l'additif est au moins un élément choisi dans le groupe constitué par la polyvinylpyrrolidone, le citrate de sodium, le bromure de cétyltriméthylammonium, le laurylsulfate de sodium et le dodécylsulfate de sodium ; une concentration d'additif dans le sol contenant M est de $1 \times 10^{-4}$ g/mL à $5 \times 10^{-2}$ g/mL.

8. Procédé de préparation d'un matériau luminescent de stannate selon la revendication 5, dans lequel l'agent réducteur est au moins un élément choisi dans le groupe constitué par l'hydrate d'hydrazine, l'acide ascorbique, le citrate de sodium, et le borohydrure de sodium ; un rapport molaire entre l'agent réducteur et un ion métallique dans la solution saline d'au moins un élément parmi Ag, Au, Pt, Pd et Cu est de 3,6:1 à 18:1.

9. Procédé de préparation d'un matériau luminescent de stannate selon la revendication 4, dans lequel le fondant est de l'acide borique ou du fluorure de magnésium.

10. Procédé de préparation d'un matériau luminescent de stannate selon la revendication 4 ou 9, dans lequel un pourcentage de la quantité molaire du fondant par rapport à la quantité molaire du matériau luminescent de stannate est 0,01% à 5%.

```
┌─────────────────────────────────────────────────────────────────────────────┐
│                        preparing a sol containing M                            │───S110
└─────────────────────────────────────────────────────────────────────────────┘
                                        │
                                        ▼
┌─────────────────────────────────────────────────────────────────────────────┐
│ surface-treating the sol containing M, adjusting a pH value of the sol         │
│ containing M to 10 to 12, heating the sol containing M at a temperature of     │
│ 60°C to 90°C with stirring, adding sodium stannate, potassium stannate or tin  │───S120
│ tetrachloride, stirring to react, centrifuging and drying, calcining at a      │
│ temperature of 300°C to 500°C for 1 to 6 hours to obtain SnO$_2$ powder        │
│ coating M                                                                       │
└─────────────────────────────────────────────────────────────────────────────┘
                                        │
                                        ▼
┌─────────────────────────────────────────────────────────────────────────────┐
│ mixing compounds containing Ln and Eu, a fluxing agent, and the SnO$_2$ powder │
│ coating M according to a stoichiometry ratio in a molecular formula of         │
│ Ln$_{2-x}$Eu$_x$Sn$_2$O$_7$@SnO$_2$@M$_y$ to obtain a mixture, grinding the     │───S130
│ mixture, wherein Ln is selected from the group consisting of Gd, Y, and La;     │
│ 0<x≤1.5; y is a molar ratio between M and the sum of Sn in Ln$_{2-x}$Eu$_x$Sn$_2$O$_7$ │
│ and in SnO$_2$@M$_y$, 0<y≤1×10$^{-2}$                                          │
└─────────────────────────────────────────────────────────────────────────────┘
                                        │
                                        ▼
┌─────────────────────────────────────────────────────────────────────────────┐
│ pre-heating the ground mixture at a temperature of 300°C to 500°C for 3 to 5   │
│ hours, cooling and grinding to obtain a pre-heated ground product, calcining    │
│ the pre-heated ground product at a temperature of 1200°C to 1400°C for 1 to     │
│ 24 hours, cooling and grinding to obtain the stannate luminescent material      │───S140
│ having the general molecular formula of Ln$_{2-x}$Eu$_x$Sn$_2$O$_7$@SnO$_2$@M$_y$, │
│ wherein @ represents coating; the stannate luminescent material uses M as a     │
│ core, SnO$_2$ as an inner shell, and Ln$_{2-x}$Eu$_x$Sn$_2$O$_7$ as an outer     │
│ shell                                                                           │
└─────────────────────────────────────────────────────────────────────────────┘
```

# FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011153692 A1